(19) Europäisches Patentamt

European Patent Office

Office européen des brevets

(11) **EP 1 215 635 A1**

(12) **EUROPEAN PATENT APPLICATION**

(43) Date of publication:
**19.06.2002 Bulletin 2002/25**

(51) Int Cl.$^7$: **G07F 19/00**, G06F 17/60

(21) Application number: **01309004.8**

(22) Date of filing: **24.10.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.12.2000 GB 0030707**
            **27.04.2001 US 844350**

(71) Applicant: **Accucard Limited**
**London W1J 9HA (GB)**

(72) Inventors:
• **Gunn, David Hugh**
  **London SW1V 2TG (GB)**
• **Mountain, David Garrett**
  **London W2 8PH (GB)**
• **Harycki, Edward Aime**
  **London SW3 3PD (GB)**

(74) Representative: **Exell, Jonathan Mark et al**
**Elkington & Fife**
**Prospect House**
**8 Pembroke Road**
**Sevenoaks, Kent TN13 1XR (GB)**

(54) **Personalised financial products and computer implemented management system**

(57)    A method and system for offering a personalised financial product to a user is described. Data is obtained from a user and used to determine profitability characteristics for the user. From the profitability characteristics, a plurality of interrelated cost-benefit parameters for the financial product are determined. The parameter settings are changeable by the user, a change to one parameter setting having a corresponding effect on one or more of the other parameter settings determined by the inter-relationship. Once the user is happy with the settings for the cost-benefit parameters, a financial product can be created having characteristics based on the parameter settings. Subsequent management of the product and changes to the parameter settings is also discussed.

Fig. 2

## EP 1 215 635 A1

**Description**

**Field of the invention**

The present invention relates to personalisable financial products and an associated computer implemented management system, both of which are particularly applicable to the credit card service industry.

**Background to the invention**

Many variations on common financial products such as credit cards, insurance policies, loans, mortgages, current accounts and the like are now available to the consumer. Each financial product attempts to offer its own unique selling point (USP) that differentiates it from the others in the same market. For example, one mortgage provider may offer a mortgage product at an interest rate discounted below the base interest rate whilst another may offer a similar mortgage product at a higher interest rate but with other incentives such as cash-back.

In each case the purchaser is faced with deciding which product is most suitable for his or her needs and this may take a large amount of research given the proliferation of financial products and financial product providers. Particularly where the purchaser is tied to the product or would encounter great difficulty transferring to another financial product provider, many purchasers expend great care and attention to ensure their choice is the most suitable product.

The large number of financial products and variations on the market also affects the financial product provider. Each product variation is usually targeted at a particular audience and is tailored to characteristics of that audience to provide, with a reasonable level of certainty, a level of profitability per customer. Accepting customers with different characteristics is likely to reduce or vary that level of profitability. A provider must therefore offer a range of products with different variations tailored to different audience characteristics in order to target more than one specific audience whilst being profitable. The overheads of marketing, management and administration obviously increase as a provider increases the number of products and product variations available but, at present, this is the only way to target a number of audiences whilst ensuring a level of profitability.

Following the uptake of the Internet by both business and home users, financial product providers are slowly making their product application procedures and product management facilities available over the Internet to end users. However, as the success of a product application is subject to one or more successful credit and/or background checks, many current application procedures still entail a waiting period in which offline checks are performed before the user is informed of success or failure of his or her application.

More recently, personalised financial products are becoming available. In such products, the benefits and costs are tailored to suit the potential profitability of a purchaser and his or her financial situation. A common example is a financial loan in which the interest rate offered is dependent on the financial and personal situation of the purchaser. In such products, a large amount of data is processed using statistical analysis and probabilistic functions to determine the value of the purchaser to the provider. This information, in combination with credit and background check results, is used to determine the benefits of the financial product offered, if the product is offered at all.

Due to the large amount of processing required to perform the statistical analysis and probabilistic evaluation, the majority of providers perform the processing offline and do not offer the products over the Internet. Even in the case of the few providers that do have products offered online, the level of personalisation offered for the products is typically extremely limited and cannot be altered by the purchaser.

**Statement of invention**

According to one aspect of the present invention, there is provided a computer implemented method of offering a personalised financial product comprising the steps of:

(a) obtaining data from a user;
(b) determining profitability characteristics of the user in dependence on the obtained data;
(c) offering a financial product to the user, the financial product from a computer system via a user interface having a plurality of inter-related cost-benefit parameters changeable by the user, the inter-relationship of the parameters being determined in dependence on the profitability characteristics of the user, wherein the parameter settings are changeable via the user interface by the user, a change to one parameter setting having a corresponding effect on one or more of the other parameter settings determined by the computer system using the inter-relationship;
(d) receiving acceptance of the financial product from the user, the acceptance including the parameter settings; and,
(e) creating a financial product for the user, the product having characteristics determined in dependence on the parameter settings.

2

In this manner, pricing for the financial product is achieved in a real-time manner and the financial product characteristics can be instantly updated by the user who will immediately see the effects of those updates as the financial product.

Preferably, the method further comprises the steps of:

(f) accepting updated parameter settings via the user interface from the user after creation of the financial product; and,

(g) updating the financial product for the user in dependence on the updated parameter settings.

The user details obtained in step (a) may include selected ones of: employment data, financial data, personal data, home address, and family data.

The profitability characteristics determined in step (b) may include selected ones of: credit check for the user's name, fraud check for the user's home address, background check on the user, projected likelihood of the user defrauding or defaulting a payment against the provider, projected likelihood of the user transferring an existing balance, projected monthly amount the user will spend, the projected likelihood the user's account will go dormant, projected likelihood the user will move to another provider user's projected usage, projected usage type and estimated timing of a lifecycle events such as moving house, marriage, death and having children.

The projected usage and usage type are estimations not only of usage of the product itself but also of connected services such as telephone and email based customer services, frequency of electronic or paper statements and other cost incurring services. The financial product may be a selected one of: credit card, loan, mortgage, investment product or insurance product.

The inter-relationship of parameters may be selected from a database of sets of inter-relationship parameters, each set being predetermined for users fitting a predetermined range of details.

The inter-relationship of parameters may be updated for an existing user based on actual data from the user's usage of the financial product.

According to another aspect of the present invention, in a computer implemented transaction system for the offer and management of financial products, there is provided a server arranged to offer customisable financial products to users, to determine profitability characteristics of the user in dependence on obtained user details and generate a user interface having a plurality of inter-related cost-benefit parameters changeable by the user, via the user interface the inter-relationship of the parameters being determined in dependence on the profitability characteristics of the user, wherein the parameter settings are changeable by the user, a change to one parameter setting having a corresponding effect on one or more of the other parameter settings determined by the inter-relationship, the server being arranged to receive an acceptance of the financial product from the user, and initiate the creation of a financial product for the user, the product having characteristics determined in dependence on the parameter settings.

Preferably, the transaction system comprises a World Wide Web site, the server being arranged to host the Web site.

The server may be connected to a database of parameter permutations, the server being arranged to access the database and determine allowable parameter permutations according to the user's details, the allowable parameter permutations being used to generate the user interface.

The database may store parameter permutations as coefficients to a predetermined equation, the equation defining the inter-relationship between parameters.

The database may store parameter permutations for each of a predetermined set of user details, the server being configured to select the closest predetermined set corresponding to the user's details.

The system may include a user interface system downloadable onto a user terminal, the user interface system being operative to accept parameter permutations dependent on the inter-relationship from the server, to generate and display the user interface in dependence on the parameter permutations, to accept user inputs changing the parameter settings within limits determined by said parameter permutations, and to communicate the selected parameter settings to the server.

By offering a user interface system that is downloaded to a user's terminal and incorporates the engine necessary to determine the effect of changes to parameters, client-server communication is reduced hence speeding up calculations. Furthermore, by storing and using only coefficients to a predetermined equation to define the interrelationships, the coefficients being transmitted to drive the engine, no complex or confidential data is transmitted to the client, thus speeding up communications and limiting data theft.

The server may be arranged to communicate with databases and data services to obtain data for calculating the profitability characteristics of the user, the databases and data services including: credit clearance, background checks, demographic data, business logic, household background databases and probability based systems.

According to a further aspect of the present invention, there is provided a data structure for storing data for use in providing customisable financial products, the data structure defining an inter-relationship of a plurality of cost-benefit parameters, the inter-relationship being derived from profitability characteristics of a prospective user of the financial product, wherein the parameter settings are changeable by the user during customisation, a change to one parameter setting having a corresponding effect on one or more of the other parameter settings, the change being determined from the inter-relationship in the data structure.

The data structure may define a plurality of inter-relationships, each inter-relationship having been pre-calculated for a range of profitability characteristics of a prospective user.

**Brief description of the drawings**

An example of the present invention will now be described in detail with reference to the accompanying drawings in which:

Figure 1 is a screen shot of a user interface of a computer implemented management system according to an example of the present invention; and,

Figure 2 is a schematic diagram of a network incorporating a computer implemented management system according to an example of the present invention.

**Detailed description**

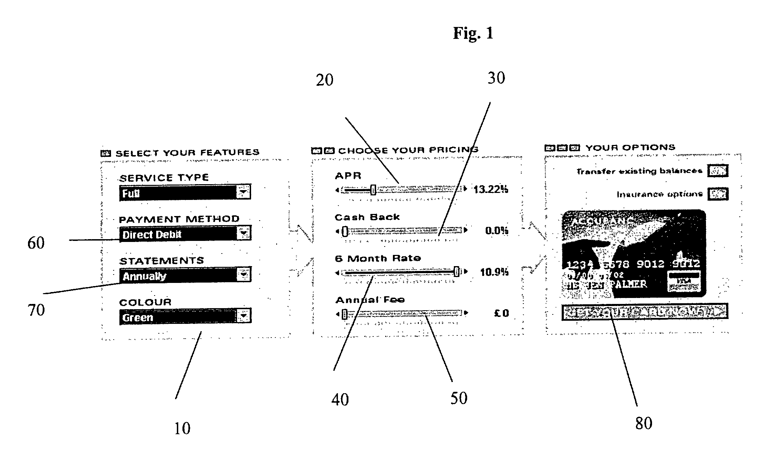

Figure 1 is a screen shot of a user interface of a computer implemented management system for a financial product according to an example of the present invention. In the following example, the financial product is a credit card. However, it will be appreciated that the computer implemented management system and underlying method are equally applicable to other financial products and their management such as loans, mortgages, insurance policies, investments, bank accounts and the like.

A user visits a World Wide Web site of a financial product provider and selects to apply for a credit card. Having entered his personal and financial details, he is presented with a user interface 10. The user interface 10 includes a number of controls 20-70. Each control corresponds to a user configurable variable relating to the credit card. Controls 20-50 are slider bars allowing the user to set a desired APR (Annual Percentage Rate) 20, cash-back percentage 30, APR applied to transferred balances 40, and annual fee 50. The control settings are interdependent. For example, by changing the settings of the cash-back control 30 the APR control position is changed, thus representing a change in the APR variable. This enables the provider to maintain a desired expected profitability as is explained further below. The remaining controls 60, 70 respectively allow the setting of payment method (Direct Debit, monthly repayment, etc.) and statement frequency by means of drop down menus.

Each control setting may be limited by the personal and financial details of the user and settings of the other controls. It will be appreciated that control settings will generally either have a cost to the user and a benefit to the provider or vice-versa. For example, a high APR is detrimental to the user but beneficial to the provider. Equally, a high cash-back percentage is detrimental to the provider but beneficial to the user. By means of the interdependencies between variable settings the user is able to adjust the characteristics of the credit card to suit his or her preferences without changing his or her profitability to the provider.

Once the user is satisfied with the control settings, he or she can accept them by clicking an accept button 80. This has the effect of triggering the issue of a new credit card for the user by the provider and creating a new account for the credit card that has characteristics corresponding to the variable settings in the controls.

A user that clears his balance every month may desire a credit card with a high cash-back percentage and low annual fee. As he clears his balance he would not care about APR rates and can thus set the controls accordingly. The beneficial effects of high cash-back and low annual fees are balanced by high APRs. Alternatively, a user that carries over balances from one month to another would wish to have a low APR. In order to obtain such an APR he or she must sacrifice some or all of the benefits of cash-back and may also have to pay or increase an annual fee.

The user interface 10 is also accessible to existing credit card customers of the provider. Upon entering details of his or her account, the user is presented with the user interface 10 and is able to update the control settings. The user can accept the updated control settings by clicking the accept button 80. The accepted control settings are applied to the user's account so that the characteristics of the credit card account are changed.

For management and accounting purposes, the provider may limit the number of times the user can access and update the controls for a credit card in any given period.

It may be that for implementation purposes certain controls are linked together to create the interdependencies. For example, the APR control 20 may be linked to the cash-back control 30 such that increasing the APR control value increases the cash-back control value and vice-versa. Obviously this limits the flexibility of the product and it is therefore desirable that the interdependency be at as high a level as possible. For a credit card it may be that all other variables are dependent on the APR value.

Another configuration would be to define a pool of points or similar in dependence on the user's financial and personal details. Changing controls so that the user benefits has the effect of deducting a predetermined number of points from the pool in dependence on the change whilst a change that detriments the user (or benefits the provider, such as increasing the period in which statements are provided or eliminating statements altogether) has the effect of increasing the number of points in the pool. Thus, a user would have complete control over the settings of the controls and would only be limited by the number of points available.

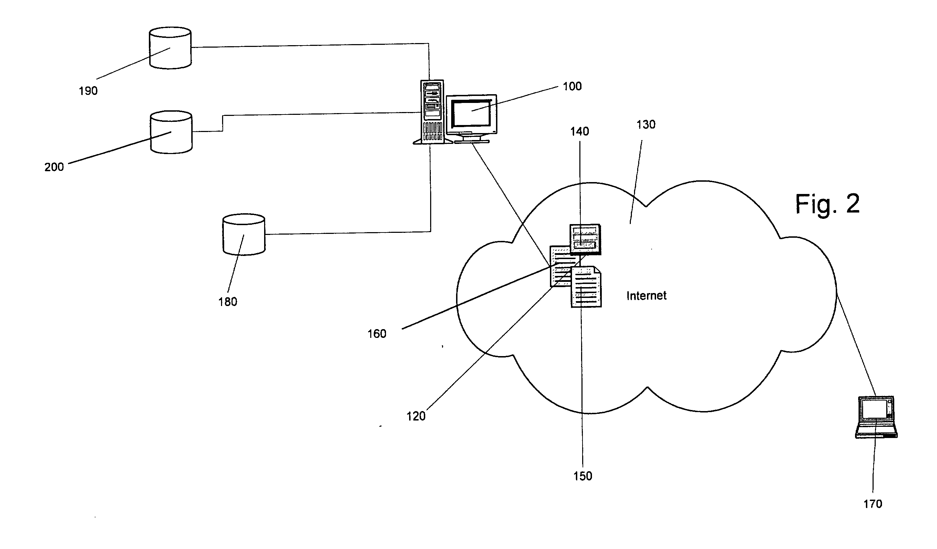

Figure 2 is a schematic diagram of a network incorporating a computer implemented management system according to an example of the present invention.

A server 100 hosts a World Wide Web site on 120 on the Internet 130. The Web site 120 includes a user details page 140, a page 150 corresponding to the user interface previously described with reference to Figure 1 and a logon page 160.

A user is able to access the Web site 120 via a Web browser on an Internet terminal 170. Upon accessing the Web site, the user is requested to logon or apply for a credit card account. A new user, selecting to apply for a new account is presented with the user details page 140 in which he or she must input his or her personal and financial details. Once the user has input the details and selects to submit them, the details are passed to the server 100. The server 100 processes the details and obtains a credit and background check for the user from a database 180. The database 180 may include data by household location, surname, business based logic, credit listings and other sources. From the results of the credit check and the personal and financial details of the user, the server 100 determines the user's net present value (NPV) to determine the user's future value to the provider. In dependence on the NPV, minimum and maximum values for each user configurable variable related to the account and a function corresponding to the variables' interrelationship are determined. These are then used to generate the user interface Web page 150 that operates in a manner corresponding to that described with reference to Figure 1. In particular, the maximum and minimum values limit the settings of the interface controls whilst the function determines their interdependency between the controls. For example, if the cash-back control is moved to increase cash-back, the function would dictate the amount to increase the APR control by.

The user is then able to operate the controls of the user interface to select settings for each of the variables. Once the user accepts the settings, they are submitted to the server 100 by the Web page 150. The server then generates a corresponding account for the user in an account database 190 and communicates with a credit card supply system (not shown) to arrange supply of the credit card.

The user is provided with a username and password enabling him to subsequently access and amend the settings for the variables on the Web page 150 via the logon page 160.

The NPV for a credit card customer depends in part on the information obtained from the credit-check and personal and financial details. These take into account estimations of the likelihood of a customer defrauding or defaulting a payment against the provider, the likelihood of a customer transferring an existing balance, a projected monthly amount the customer will spend, the likelihood the customer's account will go dormant, the likelihood the customer will move to another provider. In addition, the NPV depends upon the user's settings for the controls described above. For each type of customer, a set of possible value combinations exist that the variables must be set at in order for the customer to have a predetermined expected profitability to the provider. In essence, this defines the interrelationship between the variables in order to maintain this desired profitability.

In order to avoid the computationally expensive and complicated process of calculating the profitability for each potential customer taking into account the user settings, a number of buckets are defined, the buckets covering between them the full range of possible customer profiles. For example, if each customer is modelled by six parameters and each of the six parameters is divided into five ranges of values for the purpose of limiting the number of buckets, all possible customer profiles can be modelled in 15,625 buckets. Each bucket thus covers a wide range of possible customer profiles. A set of values for each bucket is pre-calculated and stored in a database 200. These values include coefficients corresponding to a formula approximating the relationship between the user settings in order to achieve a constant profitability, preferably as a linear approximation. The coefficients are stored with the data for the bucket in the database 200. Minimum and maximum values for each parameter are also stored in the database 200. These may be predefined to, for example, minimise the risk of taking on an unprofitable customer due to miss-scoring of NPV whilst ensuring no customer is charged a ridiculously high annual charge or interest rate.

Upon determining a potential customer's characteristics, the closest bucket is determined and the server 100 obtains the coefficients and minimum and maximum values for the bucket. These are passed along with a Web-based application, such as a Java applet, to the Internet terminal 170. The Internet terminal 170 runs the application using the coefficients applied to a standard interdependency formula and minimum and maximum values to generate the user interface.

For example, in the credit card example above, the standard interdependency formula may be:

$$APR = a(cash\text{-}back) + b(annual\ fee) + c(balance\ transfer\ APR) + constant$$

where the coefficients provided are a, b and c.

The Web-based application may be pre-configured to start the interface with parameters set at an intermediate position calculated from the Min and Max values, for example, an annual fee of £10, no cash back and an introductory interest rate of 3%. This would give the user a starting point from which he or she could adjust the parameters to suit his or her preferences.

When a user accepts the settings and establishes an account, the coefficients, maximums and minimums are stored in the database 190 with the user's account record. Should the user logon to the user interface to update the variable settings, the data is retrieved from the user's account record to drive the Web-based application discussed above.

Exact coefficients, maximums and minimums corresponding to an established customer's characteristics are likely to be determined and recorded against the user's account record. This is because there is likely to be a real return on having exact values instead of approximations based on the closest bucket. From the exact values it may turn out that the provider is being too generous and offering the user too many benefits than his or her true characteristics deserve. Alternatively, it may be that the NPV of the user should actually provide more benefits to the user. After updating the user's record with exact values, the provider can advise the user he or she should revisit the Web site 120 to update the variable values based on his or her new evaluation.

## Claims

1. A computer implemented method of offering a personalised financial product comprising the steps of:

   (a) obtaining data from a user;
   (b) determining profitability characteristics of the user in dependence on the obtained data;
   (c) offering a financial product from a computer system via a user interface to the user, the financial product having a plurality of inter-related cost-benefit parameters, the inter-relationship of the parameters being determined in dependence on the profitability characteristics of the user, wherein the parameter settings are changeable via the user interface by the user, a change to one parameter setting having a corresponding effect on one or more of the other parameter settings determined by the computer system using the inter-relationship;
   (d) receiving acceptance of the financial product from the user; and,
   (e) creating a financial product for the user, the product having characteristics determined in dependence on the parameter settings accepted by the user.

2. A method according to claim 1, further comprising the steps of:

   (f) accepting updated parameter settings via the user interface from the user after creation of the financial product; and,
   (g) updating the financial product for the user in dependence on the updated parameter settings.

3. A method according to claim 1 or 2, in which the data obtained from the user in step (a) include selected ones of: employment data, financial data, personal data, home address, and family data.

4. A method according to claim 1, 2 or 3, in which the profitability characteristics determined in step (b) include selected ones of: credit check for the user's name, fraud check for the user's home address, background check on the user, projected likelihood of the user defrauding or defaulting a payment against the provider, projected likelihood of the user transferring an existing balance, projected monthly amount the user will spend, the projected likelihood the user's account will go dormant, projected likelihood the user will move to another provider projected usage, projected usage type and estimated timing of a user's lifecycle events.

5. A method according to claim 1 to 4, in which the financial product is a selected one of: credit card, loan, mortgage, investment product or insurance product.

6. A method according to any preceding claim, in which the inter-relationship of parameters is selected from a database of sets of inter-relationship parameters, each set being predetermined for users providing data fitting a predetermined range.

7. A method according to claim 6, further comprising the step of updating the inter-relationship of parameters for an existing user based on actual data from the user's usage of the financial product.

8. A computer program comprising computer program code means for performing all the steps of any of claims 1 to 7 when said program is run on a computer.

9. A computer program as claimed in claim 8 embodied on a computer readable medium.

10. A computer implemented transaction system for the offer and management of financial products, comprising a server (100) arranged to offer customisable financial products to users, to determine profitability characteristics of the user in dependence on obtained user details and generate a user interface (10) having a plurality of inter-related cost-benefit parameter controls (20-70) changeable by the user, the inter-relationship of the parameters being determined in dependence on the profitability characteristics of the user, wherein the parameter control settings are changeable by the user via the user interface, a change to one parameter control (20-70) having a corresponding effect on one or more of the other parameter controls (20-70) determined by the inter-relationship, the server (100) being arranged to receive an acceptance of the financial product from the user, and initiate the creation of a financial product for the user, the product having characteristics determined in dependence on the parameter control settings.

11. A computer implemented transaction system according to claim 10, in which the transaction system comprises a World Wide Web site (120), the server (100) being arranged to host the Web site.

12. A computer implemented transaction system according to claim 10 or 11, in which the server (100) is connected to a database (200) of parameter permutations, the server (100) being arranged to access the database (200) and determine allowable parameter permutations according to the user's details, the allowable parameter permutations being used to generate the user interface (10).

13. A computer implemented transaction system according to claim 12, in which the database (200) stores parameter permutations as coefficients to a predetermined equation, the equation defining the inter-relationship between parameters.

14. A computer implemented transaction system according to claim 12 or 13, in which the database (200) stores parameter permutations for each of a predetermined set of user details, the server (100) being configured to select the closest predetermined set corresponding to the user's details.

15. A computer implemented transaction system according to any of claims 12 to 14, further comprising a user interface system downloadable onto a user terminal (170), the user interface system being operative to accept parameter permutations dependent on the inter-relationship from the server (100), to generate and display the user interface (10) in dependence on the parameter permutations, to accept user inputs changing the parameter settings within limits determined by said parameter permutations and to communicate selected parameter settings to the server (100).

16. A computer implemented transaction system according to any of claims 10 to 14, in which the server (100) is arranged to communicate with databases (180, 200) and data services to obtain data for calculating the profitability characteristics of the user, the databases and data services including: credit clearance, background checks, demographic data, business logic, household background databases and probability based systems.

17. A data structure for storing data for use in providing customisable financial products, the data structure defining an inter-relationship of a plurality of cost-benefit parameters, the inter-relationship being derived from profitability characteristics of a prospective user of the financial product, wherein the parameter settings are changeable by the user during customisation, a change to one parameter setting having a corresponding effect on one or more of the other parameter settings, the change being determined from the inter-relationship in the data structure.

18. A data structure according to claim 17, in which the data structure defines a plurality of inter-relationships, each inter-relationship having been pre-calculated for a range of profitability characteristics of a prospective user.

Fig. 1

Fig. 2

EP 1 215 635 A1

**European Patent**
**Office**

## DECLARATION

which under Rule 45 of the European Patent Convention
shall be considered, for the purposes of subsequent
proceedings, as the European search report

Application Number

EP 01 30 9004

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G07F19/00 G06F17/60 |

The claims relate to subject matter
excluded from patentability under
Art. 52(2) and (3) EPC. Given that the
claims are formulated in terms of
such subject matter or merely specify
commonplace features relating to
its technological implementation, the
search examiner could not
establish any technical problem which
might potentially have required an
inventive step to overcome. Hence it was
not possible to carry out a
meaningful search into the state of the
art (Rule 45 EPC). See also

Guidelines Part B Chapter VIII, 1-6.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).
                        ---
                       -----

| Place of search | Date | Examiner |
|---|---|---|
| THE HAGUE | 26 March 2002 | Rivero, C |

EPO FORM 1504 (P04C37)